# EUROPÄISCHE PATENTSCHRIFT

(11) **EP 3 118 498 B1**
(45) Veröffentlichungstag und Bekanntmachung des Hinweises auf die Patenterteilung: **15.08.2018**
(21) Anmeldenummer: 16001427.0
(22) Anmeldetag: 24.06.2016
(51) Int. Cl.: F16K 17/04, F16K 31/08, F01M 13/00

(54) **ENTLÜFTUNGS- UND/ODER DRUCKBEGRENZUNGSVENTIL**
VENTILATION AND/OR PRESSURE LIMITING VALVE
CLAPET DE LIMITATION DE PRESSION ET/OU D'AERATION

(30) Priorität: 17.07.2015 DE 102015009315
(43) Veröffentlichungstag der Anmeldung: 18.01.2017
(73) Patentinhaber: MAN Truck & Bus AG, 80995 München (DE)
(72) Erfinder: Burkhardt, Christian, 91522 Ansbach (DE)
(74) Vertreter: v. Bezold & Partner Patentanwälte - PartG mbB

(56) Entgegenhaltungen:
- EP-A1- 2 458 211
- DE-A1-102006 020 354
- DE-A1-102011 112 584
- JP-A- S6 124 883
- US-A1- 2009 199 826

## Beschreibung

Die Erfindung betrifft ein Ventil zur Entlüftung und/oder Druckbegrenzung einer Innendruck aufweisenden Vorrichtung. Die Vorrichtung ist ein Kurbelgehäuse für ein Kraftfahrzeug, insbesondere einen Kraftfahrzeug-Verbrennungsmotor.

Kurbelgehäuse von Verbrennungsmotoren benötigen Ventile zur Entlüftung und/oder Druckbegrenzung. So werden zur Entlüftung der Kurbelgehäuse nach einem Kolbenschaden und dadurch entstehenden unzulässig hohen Innendrücken Entlüftungsventile benötigt.

Aus der DE 10 2008 045 697 A1 ist bereits ein Ventil für die Kurbelgehäuseentlüftung eines Kraftfahrzeugs bekannt, wobei das Ventil mittels eines permanentmagnetischen Elements in der Schließstellung gehalten werden kann und in der Offenstellung bei Unterschreiten eines bestimmten Gasdrucks im Wesentlichen Schwerkraft-betätigt in die Schließstellung fällt. Nachteilhaft ist z. B., dass wegen der schwerkraftbedingten Betätigung die Einbaulagen des Ventils begrenzt sind. Aus dem Stand der Technik sind ferner Entlüftungssysteme mit einer Berstscheibe bekannt. Nachteilhaft daran ist allerdings, dass die Berstscheibe zur Entlüftung zerstört wird, so dass eine mehrfache Betätigung nicht möglich ist. Aus dem Stand der Technik sind ferner noch elektromagnetisch-betätigte Ventile bekannt, die allerdings bei Stromlosigkeit keine sichere Schließstellung gewährleisten, was insbesondere im Hinblick auf den im Kurbelgehäuse enthaltenen ölhaltigen Dampf kritisch ist, der ansonsten in die Umwelt entweichen würde.

Die EP 2 458 211 A1 offenbart auch ein Ventil zur Entlüftung und/oder Druckbegrenzung einen Innendruck aufweisenden Vorrichtung.

Eine Aufgabe der Erfindung ist es, ein alternatives und/oder verbessertes Entlüftungs- und/oder Druckbegrenzungsventil für ein Kurbelgehäuse zu schaffen.

Die Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Ventil zur Entlüftung und/oder Druckbegrenzung einer Innendruck aufweisenden Vorrichtung. Die Vorrichtung ist nämlich ein Kurbelgehäuse für ein Kraftfahrzeug, insbesondere einen Kraftfahrzeug-Verbrennungsmotor. Die Vorrichtung und/oder das Kurbelgehäuse stellt insbesondere ein geschlossenes System dar.

Das Ventil umfasst ein zweckmäßig verschiebbares Ventilelement, einen Ventilkörper und eine Einrichtung mit einem Ventilelement-seitigen Teil und einem Ventilkörper-seitigen Teil zur Bildung einer magnetischen, vorzugsweise ferromagnetischen, Schließkraft, um das Ventilelement in einer Schließstellung zu halten, insbesondere um einen im Ventilkörper ausgebildeten Gasdurchlass zur Entlüftung und/oder Druckbegrenzung zu schließen.

Das Ventil zeichnet sich dadurch aus, dass es eine elastisch wirksame und/oder als Federelement ausgebildete Beaufschlagungskomponente aufweist zum Beaufschlagen des Ventilelement-seitigen Teils und somit des Ventilelements in Richtung der Schließstellung.

Die Beaufschlagungskomponente ist vorzugsweise ein Federelement, z. B. eine Spiralfeder, oder ein anderes elastisch wirksames Bauteil.

Der Ventilelement-seitige Teil ist zweckmäßig in der Lage, das Ventilelement magnetisch in die Schließstellung zu bringen. Der Ventilelement-seitige Teil kann mittelbar oder unmittelbar mit dem Ventilelement verbunden sein.

Der Ventilelement-seitige Teil kann vorzugsweise auf dem Ventilelement angebracht, in das Ventilelement integriert oder durch das Ventilelement per se ausgebildet werden.

Der Ventilkörper-seitige Teil ist zweckmäßig in der Lage, das Ventilelement magnetisch in die Schließstellung zu bringen. Der Ventilkörper-seitige Teil kann mittelbar oder unmittelbar mit dem Ventilkörper verbunden sein.

Der Ventilkörper-seitige Teil kann vorzugsweise auf dem Ventilkörper angebracht, in den Ventilkörper integriert und/oder durch den Ventilkörper per se ausgebildet sein.

Bei der Kombination aus elastisch wirksamer und/oder als Federelement ausgebildeter Beaufschlagungskomponente und der Einrichtung zur Bildung einer magnetischen Schließkraft kann das Wiederverschließen des Ventils, insbesondere das Zurückbringen des Ventils aus der Öffnungsstellung in die Schließstellung, dadurch realisiert werden, dass die Kraft der Beaufschlagungskomponente den Ventilelement-seitigen Teil zurück in eine magnetische Anziehungszone bringt, innerhalb der der Ventilelement-seitige Teil und somit das Ventilelement magnetisch in die Schließstellung gezogen wird.

Vorteilhaft ist, dass das Ventil für die Mehrfachbetätigung geeignet ist und somit zerstörungsfrei arbeitet und ohne elektrische Energie auskommt.

Vorteilhaft ist ferner, dass nach Erreichen des Ansprechdrucks zur Entlüftung und/oder Druckbegrenzung jeder geringe weitere Druckanstieg das Ventil im Vergleich zu herkömmlichen Lösungen sehr viel schneller öffnen lässt. Durch die magnetische Haltekraft, welche mit zunehmendem Abstand zwischen dem Ventilelement-seitigen Teil und dem Ventilkörper-seitigen Teil, also vorzugsweise zwischen einem Dauermagneten und seinem zweckmäßig ferromagnetischen Anzugskörper, exponentiell abnimmt, kann eine schnelle Öffnung des Ventils gewährleistet werden. Zudem kann durch das schnelle Öffnen eine Auslegung des Ansprechdrucks näher an den maximal kritischen Druck erfolgen.

Der Ventilelement-seitige Teil und der Ventilkörper-seitige Teil bilden zweckmäßig eine magnetische Anziehungszone, innerhalb der der Ventilelement-seitige Teil magnetisch angezogen wird, um das Ventilelement in die Schließstellung zu bringen und/oder in der Schließstellung zu halten, vorzugsweise entgegen einem zulässigen Innendruck aus der Vorrichtung und/oder sobald sich ein unzulässiger Innendruck aus Vorrichtung abgebaut hat.

Es ist möglich, dass der Ventilelement-seitige Teil und somit zweckmäßig das Ventilelement zur Entlüftung und/oder zur Druckbegrenzung, entgegen der Beaufschlagungswirkung der Beaufschlagungskomponente und/oder durch unzulässigen Innendruck aus der Vorrichtung, aus der magnetischen Anziehungszone hinaus verschiebbar ist, so dass zweckmäßig das Ventilelement zur Entlüftung und/oder Druckbegrenzung in eine Öffnungsstellung bringbar ist.

Die Beaufschlagungskomponente wird somit zweckmäßig vorgespannt, wenn das Ventilelement in die Öffnungsstellung gebracht wird und alternativ oder ergänzend, der Ventilelement-seitige Teil aus der magnetischen Anziehungszone gebracht wird.

Die Beaufschlagungskomponente ist insbesondere ausgeführt, um den Ventilelement-seitigen Teil von außerhalb der magnetischen Anziehungszone in die magnetische Anziehungszone zurückzubringen, so dass insbesondere das Ventilelement magnetisch in die Schließstellung gebracht und/oder in der Schließstellung gehalten wird, vorzugsweise entgegen einem zulässigen Innendruck aus der Vorrichtung und/oder sobald sich ein unzulässiger Innendruck aus Vorrichtung abgebaut hat.

Die Beaufschlagungskomponente wird insbesondere durch das Ventilelement zweckmäßig während einer Entlüftung und/oder Druckbegrenzung vorgespannt und nutzt die Vorspannkraft zur Rückstellung des Ventilelement-seitigen Teils in die magnetische Anziehungszone, vorzugsweise entgegen einem zulässigen Innendruck aus der Vorrichtung und/oder sobald sich ein unzulässiger Innendruck aus Vorrichtung abgebaut hat. Die Beaufschlagungskomponente zeichnet sich dadurch aus, dass sie in der Schließstellung des Ventilelements selbst keine Schließkraft auf das Ventil ausübt, sondern vorzugsweise nur ausgeführt ist, um den Ventilelement-seitigen Teil zurück in die magnetische Anziehungszone zu bringen.

Es ist möglich, dass das Ventilelement zur Bildung des Ventilelement-seitigen Teils abschnittsweise mit dauermagnetischem Material versehen ist, z. B. auf dem Ventilelement aufgebracht und/oder in das Ventilelement integriert ist. Das dauermagnetische Material kann z. B. ringförmig ausgeführt sein oder einen oder mehrere kreisfragmentförmige Abschnitte aufweisen. Es ist grundsätzlich sogar möglich, dass das Ventilelement zur Bildung des Ventilelement-seitigen Teils insgesamt aus dauermagnetischem Material hergestellt ist. Der Ventilkörper kann zur Bildung des Ventilkörper-seitigen Teils aus ferromagnetischen Material hergestellt sein, zweckmäßig sogar insgesamt, oder abschnittsweise mit einem ferromagnetischen Material versehen sein. Das ferromagnetische Material kann z. B. auf dem Ventilkörper aufgebracht und/oder in den Ventilkörper integriert sein.

Es ist möglich, dass das Ventil einen vorzugsweise abnehmbaren Deckel mit einer Auslassöffnung zur Entlüftung und/oder Druckbegrenzung aufweist.

Der Deckel kann z. B. aus Kunststoff hergestellt sein.

Der Deckel kann einen Basisabschnitt und einen vom Basisabschnitt, vorzugsweise auf die Seite des Ventilkörpers, abstehenden Randabschnitt aufweisen, wobei die Auslassöffnung im Randabschnitt ausgebildet ist.

Das Ventil kann ein Filterelement, z. B. ein Vlies, aufweisen. Das Filterelement schützt zweckmäßig vor einem Schmutz- und/oder Partikeleindringen, lässt aber einen Gasdurchtritt zur Entlüftung und/oder Druckbegrenzung zu.

Es ist möglich, dass das Filterelement an oder in der Auslassöffnung angeordnet ist, die Auslassöffnung in durch Streben unterteilte Kammern unterteilt ist und das Filterelement an den Streben befestigt ist, und/oder das Filterelement in den Deckel integriert ist.

Zum in Position halten und/oder zur Halterung des Filterelements kann der Ventildeckel Nuten, zweckmäßig an der Auslassöffnung aufweisen.

Es ist möglich, dass die Beaufschlagungskomponente am Deckel gelagert ist, insbesondere in einer zur Zentrierung und/oder Führung der Beaufschlagungskomponente dienenden Vertiefung im Deckel. Die Vertiefung kann in den Deckel eingelassen sein.

Es ist ebenfalls möglich, dass die Beaufschlagungskomponente am Ventilelement gelagert ist, insbesondere in einer Vertiefung zur Zentrierung und/oder Führung der Beaufschlagungskomponente dienenden Vertiefung im Ventilelement. Die Vertiefung ist vorzugsweise in das Ventilelement eingelassen.

Das Ventilelement kann zumindest eine Führungsöffnung aufweisen, während der Deckel und/oder der Ventilkörper zumindest einen Führungsvorsprung zum Führen der Führungsöffnung und somit des Ventilelements aufweisen kann. Der oder die Führungsvorsprünge können als Streben ausgeführt sein.

Es ist möglich, dass mehrere Führungsöffnungen und Führungsvorsprünge einen Führungskäfig zur Führung des Ventilelements bilden.

Der Ventilkörper dient vorzugsweise zur Montage an die Vorrichtung, so dass er insbesondere Montagemittel zur Montage an die Vorrichtung aufweist. Die Montagemittel können insbesondere unregelmäßig verteilt angeordnet sein, um eine definierte Ausrichtung des Ventils zu ermöglichen und/oder eine Falschmontage zu vermeiden. Die Montagemittel können z. B. Schraubverbindungen umfassen.

Es ist möglich, dass der Deckel Festmachmittel zum Festmachen an dem Ventilkörper aufweist und die Festmachmittel vorzugsweise unregelmäßig verteilt angeordnet sind, um eine definierte Ausrichtung, insbesondere der im Deckel ausgebildeten Auslassöffnung zu ermöglichen, und/oder eine Falschmontage zu vermeiden. Die Festmachmittel können z. B ein Clipsystem umfassen.

Das Ventil dient insbesondere zur zerstörungsfreien Entlüftung und/oder Druckbegrenzung. Alternativ oder ergänzend erfolgt die Entlüftung und/oder Druckbegrenzung ohne elektrische Energie.

Zu erwähnen ist, dass das Ventilelement zum Schließen und Öffnen eines zweckmäßig im Ventilkörper ausgebildeten Gasdurchlasses in die Schließstellung und die Öffnungsstellung zur Entlüftung und/oder Druckbegrenzung bringbar ist.

Zu erwähnen ist außerdem, dass in der Öffnungsstellung die magnetische Anziehungskraft zwischen dem Ventilelement-seitigen Teil und dem Ventilkörper-seitigen Teil nicht ausreicht, um das Ventilelement-seitige Teil und somit das Ventilelement zurück in die Schließstellung zu bringen.

Die Erfindung ist nicht auf ein Ventil begrenzt, sondern umfasst ebenfalls ein Kurbelgehäuse für ein Kraftfahrzeug, insbesondere einen Kraftfahrzeug-Verbrennungsmotor, mit einem Ventil wie hierin offenbart.

Es ist möglich, dass das Ventil in ein Loch, insbesondere ein Kernloch, des Kurbelgehäuses verbaut ist, in einen ölvorabgeschiedenen Raum verbaut ist und/oder auf der nicht-abgasführenden und somit zweckmäßig kalten Seite des Kurbelgehäuses verbaut ist.

Es ist möglich, dass die Auslassöffnung des Ventils nicht in eine Tasche eines angrenzenden Bauteils, nämlich eines Luftpressers, gerichtet ist, und/oder mit einer Anbauleitung, z. B. einem Schlauch, Rohr etc., verbunden ist, so dass die Entlüftung und/oder Druckbegrenzung über die Anbauleitung an einer vom Ventil entfernten Position erfolgen kann.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Querschnittsansicht eines Ventils gemäß einer Ausführungsform der Erfindung in einer Schließstellung,
- Figur 2: zeigt eine Querschnittsansicht des Ventils der Figur 1 in einer Öffnungsstellung zur Entlüftung und/oder Druckbegrenzung, und
- Figur 3: zeigt eine schematische Ansicht einer magnetischen Anziehungszone gemäß einer Ausführungsform der Erfindung.

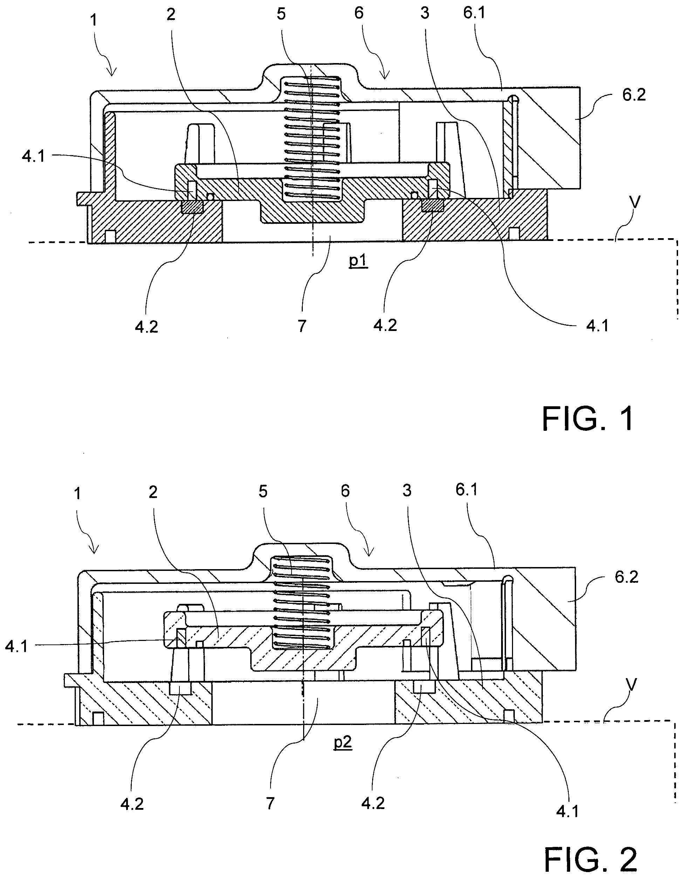

Figur 1 zeigt eine Querschnittsansicht eines Ventils 1 gemäß einer Ausführungsform der Erfindung in einer Schließstellung, während Figur 2 eine Querschnittsansicht des Ventils 1 in einer Öffnungsstellung zur Entlüftung und/oder Druckbegrenzung zeigt. Das Ventil 1 wird nachfolgend unter Bezugnahme auf die Figuren 1 und 2 beschrieben.

Das Ventil 1 ist zur Entlüftung und/oder Druckbegrenzung einer Innendruck p1, p2 aufweisenden, schematisch gezeigten Vorrichtung V ausgeführt. Die Vorrichtung V stellt zweckmäßig ein geschlossenes System dar und kann insbesondere ein Kurbelgehäuse für ein Kraftfahrzeug sein. Der Innendruck p1 stellt einen zulässigen Innendruck dar. Der Innendruck p2 stellt einen unzulässigen Innendruck dar, so dass eine Entlüftung und/oder Druckbegrenzung erforderlich ist.

Das Ventil 1 umfasst ein zweckmäßig im Wesentlichen plattenförmiges, verschiebbares Ventilelement 2, einen Ventilkörper 3 (Ventilflansch) und eine Einrichtung zur Bildung einer magnetischen, insbesondere ferromagnetischen Schließkraft, um das Ventilelement 2 in einer Schließstellung zu halten.

Die Einrichtung zur Bildung der magnetischen Schließkraft umfasst einen Ventilelement-seitigen Teil 4.1 und einen Ventilkörper-seitigen Teil 4.2.

Das Ventil 1 umfasst eine als Federelement, insbesondere Spiralfeder, ausgeführte, elastisch wirksame Beaufschlagungskomponente 5 zum Beaufschlagen des Ventilelement-seitigen Teils 4.1 und somit des Ventilelements 2 in Richtung der Schließstellung.

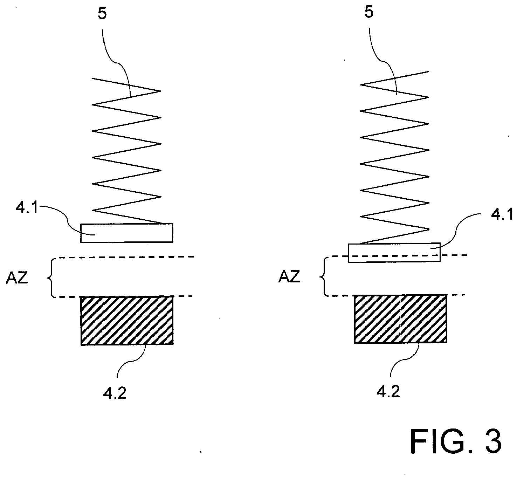

Der Ventilelement-seitige Teil 4.1 und der Ventilkörper-seitige Teil 4.2 bilden eine in Figur 3 schematisch dargestellte Anziehungszone AZ, innerhalb der das Ventilelement-seitige Teil 4.1 magnetisch angezogen wird, um das Ventilelement 2 magnetisch in die Schließstellung zu bringen und in der Schließstellung zu halten, zweckmäßig entgegen dem zulässigen Innendruck p1.

Der Ventilelement-seitige Teil 4.1 und somit das Ventilelement 2 wird durch den unzulässigen Innendruck p2, also insbesondere zur Entlüftung und/oder Druckbegrenzung, entgegen der Beaufschlagungswirkung der Beaufschlagungskomponente 5 aus der magnetischen Anziehungszone AZ hinausverschoben, so dass das Ventilelement 2 in eine Öffnungsstellung zur Entlüftung und/oder Druckbegrenzung gebracht wird. Außerhalb der magnetischen Anziehungszone AZ herrscht keine magnetische Anziehungskraft zwischen dem Ventilelement-seitigen Teil 4.1 und dem Ventilkörper-seitigen Teil 4.2 bzw. die Anziehungskraft reicht nicht aus, um das Ventilelement 2 in die Schließstellung zu bringen.

Die Beaufschlagungskomponente 5 ist allerdings ausgeführt, um den Ventilelement-seitigen Teil 4.1 von außerhalb der magnetischen Anziehungszone AZ zurück in die magnetische Anziehungszone AZ zu bringen, insbesondere, wenn der unzulässige Innendruck p2 abgebaut ist und/oder entgegen einem zulässigen Innendruck p1. Sobald sich der unzulässige Innendruck p2 abgebaut hat, reicht die Rückstellkraft der Beaufschlagungskomponente 5 aus, um den Ventilelement-seitigen Teil 4.1 in die magnetische Anziehungszone AZ zurück zu bringen.

Die Beaufschlagungskomponente 5 wird durch das Ventilelement 2 vorgespannt, so dass es mit einer Vorspannkraft versehen ist. Die Beaufschlagungskomponente nutzt die Vorspannkraft zur Rückstellung des Ventilelement-seitigen Teils 4.1 in die magnetische Anziehungszone AZ, sobald sich der unzulässige Innendruck abgebaut hat bzw. entgegen dem zulässigen Innendruck p1.

Die Beaufschlagungskomponente 5 kann derart ausgebildet sein, dass sie in der Schließstellung des Ventilelements 2 keine eigene Schließkraft auf das Ventilelement 2 ausübt. In diesem Fall dient die Beaufschlagungskomponente 5 nur dazu, den Ventilelement-seitigen Teil 4.1 in die magnetische Anziehungszone AZ zurückzubringen, in der das Ventilelement 2 magnetisch in die Schließstellung gebracht wird.

Alternativ kann die Beaufschlagungskomponente 5 in der Schließstellung des Ventilelements 2 eine eigene Schließkraft auf das Ventilelement 2 ausüben, so dass die Beaufschlagungskomponente 5 zu einer Schließkraftverstärkung zusätzlich zu der magnetischen Haltekraft zwischen dem Ventilelement-seitigen Teil 4.1 und dem Ventilkörper-seitigen Teil 4.2 führt.

In der gezeigten Ausführungsform ist der Ventilelement-seitige Teil 4.1 in das Ventilelement 2 integriert, vorzugsweise als ringförmig oder kreisfragmentförmig ausgebildetes dauermagnetisches Material, während zur Bildung des Ventilkörper-seitigen Teils 4.2 der Ventilkörper 3 insgesamt aus ferromagnetischen Material hergestellt ist.

Der Ventilkörper 3 umfasst einen Gasdurchlass 7 zur Entlüftung und/oder Druckbegrenzung. Der Gasdurchlass 7 wird durch das Ventilelement 2 in der Öffnungsstellung zur Entlüftung und/oder Druckbegrenzung geöffnet und in der Schließstellung geschlossen.

Das Ventil 1 umfasst ferner einen vorzugsweise abnehmbaren Deckel 6 mit einer Auslassöffnung zur Entlüftung und/oder Druckbegrenzung.

Der Deckel 6 umfasst einen Basisabschnitt 6.1 und einen vom Basisabschnitt 6.1 auf die Seite des Ventilkörpers 3 abstehenden Randabschnitt 6.2, wobei die Auslassöffnung im Randabschnitt 6.2 ausgebildet ist.

Der Deckel 6 umfasst ferner ein als Vlies ausgebildetes Filterelement, das vor einem Schmutz- oder Partikeleindringen schützt, aber einen Gasdurchtritt zur Entlüftung und/oder Druckbegrenzung zulässt. Das Filterelement ist an oder in der Auslassöffnung angeordnet und vorzugsweise an Streben, die die Auslassöffnung in Kammern unterteilen, befestigt.

Die Beaufschlagungskomponente 5 ist einerseits am Deckel 6 gelagert und andererseits an dem Ventilelement 2. Insbesondere ist die Beaufschlagungskomponente 5 einerseits in einer zur Zentrierung und/oder Führung der Beaufschlagungskomponente 5 dienenden, im Deckel 6 eingelassenen Vertiefung gelagert und andererseits in einer zur Zentrierung und/oder Führung der Beaufschlagungskomponente 5 dienenden, im Ventilelement 2 eingelassenen Vertiefung gelagert.

Das Ventilelement 2 umfasst ferner mehrere Führungsöffnungen, während der Deckel 6 und alternativ oder ergänzend der Ventilkörper 3 mehrere Führungsvorsprünge zum Führen der Führungsöffnungen und somit des Ventilelements 2 aufweist. Die Führungsöffnungen und die Führungsvorsprünge, die zweckmäßig als Führungsstreben ausgeführt sind, bilden eine Art Führungskäfig für das Ventilelement 2.

Der Ventilkörper 3 umfasst Montagemittel zur Montage an die Vorrichtung V, wobei die Montagemittel unregelmäßig verteilt angeordnet sind, so dass eine definierte Ausrichtung des Ventils 1 ermöglicht wird.

Der Deckel 6 umfasst Festmachmittel, vorzugsweise ein Clipsystem, zum Festmachen an dem Ventilkörper 3, wobei die Festmachmittel unregelmäßig verteilt angeordnet sind, um eine definierte Ausrichtung der in Deckel 6 ausgebildeten Auslassöffnung zu ermöglichen. Die Entlüftung und/oder Druckbegrenzung erfolgt vorzugsweise aus der Auslassöffnung in dem Deckel 6 in die Umgebung. Alternativ ist es allerdings möglich, die Auslassöffnung mit einer Anbauleitung, z. B. einem Schlauch oder einem Rohr, zu verbinden, so dass die Entlüftung und/oder Druckbegrenzung an einer vom Ventil 1, insbesondere der Auslassöffnung entfernten Position darstellbar ist.

Das Ventil 1 eignet sich insbesondere zur Entlüftung und/oder Druckbegrenzung eines Kurbelgehäuses. Das Ventil 1 kann insbesondere in ein Kernloch des Kurbelgehäuses verbaut werden, in einen ölvorabgeschiedenen Raum verbaut werden und/oder auf der nicht-abgasführenden Seite und somit auf der kalten Seite des Kurbelgehäuses verbaut werden.

Das Ventil 1 kann dabei insbesondere so angeordnet und ausgerichtet werden, dass die Auslassöffnung des Ventils nicht in eine Tasche eines angrenzenden Luftpressers gerichtet ist, sondern vorzugsweise über die zuvor erwähnte Anbauleitung an einer vom Ventil 1 entfernten Position erfolgt.

Figur 3 zeigt schematisch eine magnetische Anziehungszone AZ, innerhalb der der Ventilelement-seitige Teil 4.1 und somit das Ventilelement 2 magnetisch in die Schließstellung gebracht und/oder darin gehalten wird, außerhalb davon aber nicht.

In Figur 3 links ist der Ventilelement-seitige Teil 4.1 außerhalb der magnetischen Anziehungszone AZ gezeigt und rechts innerhalb der magnetischen Anziehungszone AZ

Außerhalb der magnetischen Anziehungszone AZ herrscht keine oder eine zu geringe magnetische Anziehungskraft, um den Ventilelement-seitigen Teil 4.1 und somit das Ventilelement 2 magnetisch in die Schließstellung zu bringen. Allerdings sorgt nach der Entlüftung und/oder Druckbegrenzung bzw. sobald sich der unzulässige Überdruck p2 abgebaut hat, die Beaufschlagungskomponente 5 dafür, den Ventilelement-seitigen Teil 4.1 und somit das Ventilelement 2 zurück in die magnetische Anziehungszone AZ zu bringen.

Die Erfindung ist nicht auf die oben beschriebenen Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Ventil, insbesondere Entlüftungs- und/oder Druckbegrenzungsventil
- 2: Verschiebbares Ventilelement
- 3: Ventilkörper, z. B. Ventilflansch
- 4.1: Ventilelement-seitiger Teil zur Bildung einer magnetischen Schließkraft
- 4.2: Ventilkörper-seitiger Teil zur Bildung einer magnetischen Schließkraft
- 5: Beaufschlagungskomponente, insbesondere Rückstellelement
- 6: Deckel
- 6.1: Basisabschnitt des Deckels
- 6.2: Randabschnitt des Deckels
- 7: Gasdurchlass
- V: Vorrichtung, insbesondere geschlossenes System und/oder Kurbelgehäuse
- p1: Zulässiger Innendruck
- p2: Unzulässiger Innendruck
- AZ: Anziehungszone

## Patentansprüche

1. Ventil (1) zur Entlüftung und/oder Druckbegrenzung einer Innendruck (p1, p2) aufweisenden Vorrichtung (V), nämlich eines Kurbelgehäuses (V) für ein Kraftfahrzeug, mit einem verschiebbaren Ventilelement (2), einem Ventilkörper (3) und einer Einrichtung mit einem Ventilelement-seitigen Teil (4.1) und einem Ventilkörper-seitigen Teil (4.2) zur Bildung einer magnetischen Schließkraft, um das Ventilelement (2) in einer Schließstellung zu halten, wobei das Ventil (1) eine elastisch wirksame und/oder als Federelement ausgebildete Beaufschlagungskomponente (5) zum Beaufschlagen des Ventilelement-seitigen Teils (4.1) und somit des Ventilelements (2) in Richtung der Schließstellung aufweist, **dadurch gekennzeichnet, dass** die Beaufschlagungskomponente (5) in der Schließstellung des Ventilelements (2) keine Schließkraft auf das Ventilelement (2) ausübt.

2. Ventil (1) nach Anspruch 1, **dadurch gekennzeichnet, dass** der Ventilelement-seitige Teil (4.1) und der Ventilkörper-seitige Teil (4.2) eine magnetische Anziehungszone (AZ) bilden, innerhalb der der Ventilelement-seitige Teil (4.1) magnetisch angezogen wird, um das Ventilelement (2) magnetisch in die Schließstellung zu bringen und/oder in der Schließstellung zu halten.

3. Ventil (1) nach Anspruch 2, **dadurch gekennzeichnet, dass** der Ventilelement-seitige Teil (4.1) und somit das Ventilelement (2) aus der magnetischen Anziehungszone (AZ) entgegen der Beaufschlagungswirkung der Beaufschlagungskomponente (5) hinaus verschiebbar ist, um das Ventilelement (2) zur Entlüftung und/oder Druckbegrenzung in eine Öffnungsstellung zu bringen.

4. Ventil (1) nach Anspruch 2 oder 3, **dadurch gekennzeichnet, dass** die Beaufschlagungskomponente (5) ausgeführt ist, um den Ventilelement-seitigen Teil (4.1) von außerhalb der magnetischen Anziehungszone (AZ) in die magnetische Anziehungszone (AZ) zurück zu bringen, so dass das Ventilelement (2) magnetisch in die Schließstellung gebracht und/oder in der Schließstellung gehalten wird.

5. Ventil (1) nach einem der Ansprüche 2 bis 4, **dadurch gekennzeichnet, dass** die Beaufschlagungskomponente (5) durch das Ventilelement (2) vorspannbar ist und die Beaufschlagungskomponente (5) die Vorspannkraft zur Rückstellung des Ventilelement-seitigen Teils (4.1) in die magnetische Anziehungszone (AZ) nutzt.

6. Ventil (1) nach einem der vorhergehenden Ansprüche, **dadurch gekennzeichnet, dass** die Beaufschlagungskomponente (5) in der Schließstellung des Ventilelements (2) nur ausgeführt ist, um den Ventilelement-seitigen Teil (4.1) in die magnetische Anziehungszone (AZ) zu bringen.

7. Ventil (1) nach einem der vorhergehenden Ansprüche, **dadurch gekennzeichnet, dass** das Ventilelement (2) zur Bildung des Ventilelement-seitigen Teils (4.1) abschnittsweise mit ringförmig oder kreisfragmentförmig ausgebildetem dauermagnetischem Material (4.1) versehen ist.

8. Ventil (1) nach einem der vorhergehenden Ansprüche, **dadurch gekennzeichnet, dass** der Ventilkörper (3) zur Bildung des Ventilkörper-seitigen Teils (4.2) aus ferromagnetischem Material hergestellt ist oder abschnittsweise mit einem ferromagnetischen Material (4.2) versehen ist.

9. Ventil (1) nach einem der vorhergehenden Ansprüche, **dadurch gekennzeichnet, dass** das Ventil (1) einen vorzugsweise abnehmbaren Deckel (6) mit einer Auslassöffnung zur Entlüftung und/oder Druckbegrenzung aufweist.

10. Ventil (1) nach Anspruch 9, **dadurch gekennzeichnet, dass** der Deckel (6) einen Basisabschnitt (6.1) und einen vom Basisabschnitt (6.1) abstehenden Randabschnitt (6.2) aufweist und die Auslassöffnung im Randabschnitt (6.2) ausgebildet ist.

11. Ventil (1) nach einem der vorhergehenden Ansprüche, **dadurch gekennzeichnet, dass** das Ventil (1) ein Filterelement, nämlich ein Vlies, aufweist und das Filterelement vor einem Schmutz- oder Partikeleindringen schützt, aber einen Gasdurchtritt zur Entlüftung und/oder Druckbegrenzung zulässt.

12. Ventil (1) nach Anspruch 11, **dadurch gekennzeichnet, dass**
- das Filterelement an oder in der Auslassöffnung angeordnet ist,
- die Auslassöffnung in durch Streben unterteilte Kammern unterteilt ist und das Filterelement an den Streben befestigt ist, und/oder
- das Filterelement in den Deckel (6) integriert ist.

13. Ventil (1) nach einem der Ansprüche 9 bis 12, **dadurch gekennzeichnet, dass** die Beaufschlagungskomponente (5) am Deckel (6) und am Ventilelement (2) gelagert ist.

14. Ventil (1) nach einem der Ansprüche 9 bis 13, **dadurch gekennzeichnet, dass** das Ventilelement (2) zumindest eine Führungsöffnung und der Deckel (6) und/oder der Ventilkörper (3) zumindest einen Führungsvorsprung zum Führen der Führungsöffnung und somit des Ventilelements (2) aufweist.

15. Ventil (1) nach einem der vorhergehenden Ansprüche, **dadurch gekennzeichnet, dass** der Ventilkörper (3) Montagemittel zur Montage an die Vorrichtung (V) aufweist und die Montagemittel unregelmäßig verteilt angeordnet sind, um eine definierte Ausrichtung des Ventils (1) zu ermöglichen, und/oder der Deckel (6) Festmachmittel zum Festmachen an dem Ventilkörper (3) aufweist und die Festmachmittel unregelmäßig verteilt angeordnet sind, um eine definierte Ausrichtung der im Deckel (6) ausgebildeten Auslassöffnung zu ermöglichen.

16. Ventil (1) nach einem der vorhergehenden Ansprüche, **dadurch gekennzeichnet, dass** das Ventil zur zerstörungsfreien Entlüftung und/oder Druckbegrenzung ausgeführt ist.

17. Ventil (1) nach einem der vorhergehenden Ansprüche, **dadurch gekennzeichnet, dass** das Ventilelement (2) zum Schließen und Öffnen eines im Ventilkörper (3) ausgebildeten Gasdurchlasses (7) in die Schließstellung und eine Öffnungsstellung zur Entlüftung und/oder Druckbegrenzung bringbar ist.

18. Kurbelgehäuse (V) für ein Kraftfahrzeug, mit einem Ventil (1) nach einem der vorhergehenden Ansprüche.

19. Kurbelgehäuse (V) nach Anspruch 18, **dadurch gekennzeichnet, dass** das Ventil (1) in ein Loch des Kurbelgehäuses (V) verbaut ist, in einen ölvorabgeschiedenen Raum verbaut ist und/oder auf der nicht-abgasführenden Seite des Kurbelgehäuses (V) verbaut ist.

20. Kurbelgehäuse (V) nach Anspruch 18 oder 19, **dadurch gekennzeichnet, dass** die Auslassöffnung des Ventils (1) nicht in eine Tasche eines angrenzenden Bauteils, nämlich eines Luftpressers, gerichtet ist, und/oder mit einer Anbauleitung verbunden ist, sodass die Entlüftung und/oder Druckbegrenzung über die Anbauleitung an einer vom Ventil (1) entfernten Position erfolgen kann.

## Claims

1. Valve (1) for the venting and/or pressure limitation of a device (V) having an inner pressure (p1, p2), specifically of a crankcase (V) for a motor vehicle, having a displaceable valve element (2), having a valve body (3), and having a device which has a valve-element-side part (4.1) and a valve-body-side part (4.2) and which serves for producing a magnetic closing force in order to keep the valve element (2) in a closed position, wherein the valve (1) has a loading component (5) which acts in an elastic manner and/or is formed as a spring element and which serves for acting on the valve-element-side part (4.1) and thus the valve element (2) in the direction of the closed position, **characterized in that**, in the closed position of the valve element (2), the loading component (5) exerts no closing force on the valve element (2).

2. Valve (1) according to Claim 1, **characterized in that** the valve-element-side part (4.1) and the valve-body-side part (4.2) form a magnetic zone of attraction (AZ) within which the valve-element-side part (4.1) is magnetically attracted in order, magnetically, to bring the valve element (2) into the closed position and/or to keep said element in the closed position.

3. Valve (1) according to Claim 2, **characterized in that** the valve-element-side part (4.1) and thus the valve element (2) is able to be displaced out of the magnetic zone of attraction (AZ) counter to the loading action of the loading component (5) in order to bring the valve element (2) into an open position for the purpose of venting and/or pressure limitation.

4. Valve (1) according to Claim 2 or 3, **characterized in that** the loading component is designed to bring the valve-element-side part (4.1) from outside the magnetic zone of attraction (AZ) back into the magnetic zone of attraction (AZ), with the result that the valve element (2) is, magnetically, brought into the closed position and/or kept in the closed position.

5. Valve (1) according to one of Claims 2 to 4, **characterized in that** the loading component (5) is able to be prestressed by the valve element (2), and the loading component (5) uses the prestress force for returning the valve-element-side part (4.1) into the magnetic zone of attraction (AZ).

6. Valve (1) according to one of the preceding claims, **characterized in that**, in the closed position of the valve element (2), the loading component (5) is designed only to bring the valve-element-side part (4.1) into the magnetic zone of attraction (AZ).

7. Valve (1) according to one of the preceding claims, **characterized in that**, for forming the valve-element-side part (4.1), the valve element (2) is provided in sections with ring-shaped or circle-segment-shaped permanent magnetic material (4.1).

8. Valve (1) according to one of the preceding claims, **characterized in that**, for forming the valve-body-side part (4.2), the valve body (3) is produced from ferromagnetic material or is provided in sections with a ferromagnetic material (4.2).

9. Valve (1) according to one of the preceding claims, **characterized in that** the valve (1) has a preferably removable cover (6) with an outlet opening for venting and/or pressure limitation.

10. Valve (1) according to Claim 9, **characterized in that** the cover (6) has a base section (6.1) and an edge section (6.2) which protrudes from the base section (6.1), and the outlet opening is formed in the edge section (6.2).

11. Valve (1) according to one of the preceding claims, **characterized in that** the valve (1) has a filter element, specifically a nonwoven, and the filter element protects against ingress of dirt or particles but permits the passage of gas for the purpose of venting and/or pressure limitation.

12. Valve (1) according to Claim 11, **characterized in that**
- the filter element is arranged at or in the outlet opening,
- the outlet opening is subdivided into chambers subdivided by struts and the filter element is fastened to the struts, and/or
- the filter element is integrated into the cover (6).

13. Valve (1) according to one of Claims 9 to 12, **characterized in that** the loading component (5) is mounted on the cover (6) and on the valve element (2).

14. Valve (1) according to one of Claims 9 to 13, **characterized in that** the valve element (2) has at least one guide opening, and the cover (6) and/or the valve body (3) have/has at least one guide projection for the guidance of the guide opening and thus of the valve element (2).

15. Valve (1) according to one of the preceding claims, **characterized in that** the valve body (3) has mounting means for the mounting to the device (V) and the mounting means are arranged in an unevenly distributed manner in order to allow a defined orientation of the valve (1), and/or the cover (6) has fixing means for the fixing to the valve body (3) and the fixing means are arranged in an unevenly distributed manner in order to allow a defined orientation of the outlet opening formed in the cover (6).

16. Valve (1) according to one of the preceding claims, **characterized in that** the valve is designed for non-destructive venting and/or pressure limitation.

17. Valve (1) according to one of the preceding claims, **characterized in that**, for the purpose of closing and opening a gas passage (7) formed in the valve body (3), the valve element (2) is able to be brought into the closed position and an open position for venting and/or pressure limitation.

18. Crankcase (V) for a motor vehicle, having a valve (1) according to one of the preceding claims.

19. Crankcase (V) according to Claim 18, **characterized in that** the valve (1) is fitted into a hole of the crankcase (V), is fitted into a chamber from which oil has been pre-separated, and/or is fitted on that side of the crankcase (V) where exhaust gas is not guided.

20. Crankcase (V) according to Claim 18 or 19, **characterized in that** the outlet opening of the valve (1) is not directed into a pocket of an adjacent component, specifically of an air compressor, and/or is connected to an attachment line such that the venting and/or pressure limitation may be realized, via the attachment line, at a position which is at a distance from the valve (1).

## Revendications

1. Clapet (1) pour l'aération et/ou la limitation de pression d'un dispositif (V) présentant une pression intérieure (p1, p2), à savoir d'un carter de vilebrequin (V) pour un véhicule automobile, avec un élément de clapet déplaçable (2), un corps de clapet (3) et un agencement avec une partie côté élément de clapet (4.1) et une partie côté corps de clapet (4.2) pour la formation d'une force de fermeture magnétique, afin de maintenir l'élément de clapet (2) dans une position de fermeture, dans lequel le clapet (1) présente un composant d'actionnement à action élastique et/ou formé par un élément de ressort (5) pour actionner la partie côté élément de clapet (4.1) et dès lors l'élément de clapet (2) en direction de la position de fermeture, **caractérisé en ce que** le composant d'actionnement (5) n'exerce aucune force de fermeture sur l'élément de clapet (2) dans la position de fermeture de l'élément de clapet (2).

2. Clapet (1) selon la revendication 1, **caractérisé en ce que** la partie côté élément de clapet (4.1) et la partie côté corps de clapet (4.2) forment une zone d'attraction magnétique (AZ), à l'intérieur de laquelle la partie côté élément de clapet (4.1) est attirée magnétiquement, afin d'amener et/ou de maintenir magnétiquement l'élément de clapet (2) dans la position de fermeture.

3. Clapet (1) selon la revendication 2, **caractérisé en ce que** la partie côté élément de clapet (4.1) et dès lors l'élément de clapet (2) peut être déplacé(e) hors de la zone d'attraction magnétique (AZ) contre l'effet d'actionnement du composant d'actionnement (5), afin d'amener l'élément de clapet (2) dans une position d'ouverture pour l'aération et/ou la limitation de pression.

4. Clapet (1) selon la revendication 2 ou 3, **caractérisé en ce que** le composant d'actionnement (5) est conçu pour ramener la partie côté élément de clapet (4.1) depuis l'extérieur de la zone d'attraction magnétique (AZ) jusque dans la zone d'attraction magnétique (AZ), de telle manière que l'élément de clapet (2) soit amené et/ou maintenu magnétiquement dans la position de fermeture.

5. Clapet (1) selon l'une quelconque des revendications 2 à 4, **caractérisé en ce que** le composant d'actionnement (5) peut être précontraint par l'élément de clapet (2) et le composant d'actionnement (5) utilise la force de précontrainte pour le rappel de la partie côté élément de clapet (4.1) dans la zone d'attraction magnétique (AZ) .

6. Clapet (1) selon l'une quelconque des revendications précédentes, **caractérisé en ce que** le composant d'actionnement (5) dans la position de fermeture de l'élément de clapet (2) est conçu uniquement pour amener la partie côté élément de clapet (4.1) dans la zone d'attraction magnétique (AZ).

7. Clapet (1) selon l'une quelconque des revendications précédentes, **caractérisé en ce que** l'élément de clapet (2) est muni localement, pour la formation de la partie côté élément de clapet (4.1), de matériau magnétique permanent (4.1) configuré en forme d'anneau ou de fragment de cercle.

8. Clapet (1) selon l'une quelconque des revendications précédentes, **caractérisé en ce que**, pour la formation de la partie côté corps de clapet (4.2), le corps de clapet (3) est fabriqué en matériau ferromagnétique ou est muni localement d'un matériau ferromagnétique (4.2).

9. Clapet (1) selon l'une quelconque des revendications précédentes, **caractérisé en ce que** le clapet (1) présente un couvercle de préférence amovible (6) avec une ouverture de sortie pour l'aération et/ou la limitation de pression.

10. Clapet (1) selon la revendication 9, **caractérisé en ce que** le couvercle (6) présente une partie de base (6.1) et une partie de bord (6.2) saillante sur la partie de base (6.1) et l'ouverture de sortie est formée dans la partie de bord (6.2).

11. Clapet (1) selon l'une quelconque des revendications précédentes, **caractérisé en ce que** le clapet (1) présente un élément de filtre, à savoir une toile, et l'élément de filtre protège contre une pénétration de crasses ou de particules, mais permet un passage de gaz pour l'aération et/ou la limitation de pression.

12. Clapet (1) selon la revendication 11, **caractérisé en ce que**
- l'élément de filtre est disposé sur ou dans l'ouverture de sortie,
- l'ouverture de sortie est divisée en chambres délimitées par des entretoises et l'élément de filtre est fixé aux entretoises, et/ou
- l'élément de filtre est intégré dans le couvercle (6).

13. Clapet (1) selon l'une quelconque des revendications 9 à 12, **caractérisé en ce que** le composant d'actionnement (5) est appuyé sur le couvercle (6) et sur l'élément de clapet (2).

14. Clapet (1) selon l'une quelconque des revendications 9 à 13, **caractérisé en ce que** l'élément de clapet (2) présente au moins une ouverture de guidage et le couvercle (6) et/ou le corps de clapet (3) présente au moins une saillie de guidage pour le guidage de l'ouverture de guidage et dès lors de l'élément de clapet (2) .

15. Clapet (1) selon l'une quelconque des revendications précédentes, **caractérisé en ce que** le corps de clapet (3) présente des moyens de montage pour le montage sur le dispositif (V) et les moyens de montage sont disposés de façon irrégulièrement répartie, afin de permettre une orientation définie du clapet (1), et/ou le couvercle (6) présente des moyens d'immobilisation en vue de son immobilisation sur le corps de clapet (3) et les moyens d'immobilisation sont disposés de façon irrégulièrement répartie, afin de permettre une orientation définie de l'ouverture de sortie formée dans le couvercle (6).

16. Clapet (1) selon l'une quelconque des revendications précédentes, **caractérisé en ce que** le clapet est conçu pour une aération et/ou une limitation de pression sans destruction.

17. Clapet (1) selon l'une quelconque des revendications précédentes, **caractérisé en ce que** l'élément de clapet (2) peut être amené, pour ouvrir et fermer un passage de gaz (7) formé dans le corps de clapet (3), dans la position de fermeture et dans une position d'ouverture pour l'aération et/ou la limitation de pression.

18. Carter de vilebrequin (V) pour un véhicule automobile, doté d'un clapet (1) selon l'une quelconque des revendications précédentes.

19. Carter de vilebrequin (V) selon la revendication 18, **caractérisé en ce que** le clapet (1) est installé dans un trou du carter de vilebrequin (V), est installé dans un espace à pré-séparation d'huile et/ou est installé sur le côté du carter de vilebrequin (V) non balayé par le gaz d'échappement.

20. Carter de vilebrequin (V) selon la revendication 18 ou 19, **caractérisé en ce que** l'ouverture de sortie du clapet (1) n'est pas dirigée dans une poche d'un composant adjacent, à savoir un compresseur d'air, et/ou est reliée à une conduite auxiliaire, de telle manière que l'aération et/ou la limitation de pression puisse être effectuée en une position éloignée du clapet (1) à l'aide de la conduite auxiliaire.
